# EUROPEAN PATENT APPLICATION

(11) **EP 2 182 717 A2**
(43) Date of publication of application: **05.05.2010**
(21) Application number: 09013592.2
(22) Date of filing: 28.10.2009
(51) Int. Cl.: H04N 5/04

(54) **Wireless image transferring apparatus, wireless image receiving apparatus and wireless image transmitting apparatus, and wireless image transferring method, wireless image receiving method and wireless image transmitting method**

(30) Priority: 30.10.2008 JP 2008280309
(71) Applicant: VICTOR COMPANY OF JAPAN, LIMITED, Yokohama-shi, Kanagawa-ken, 221-8528 (JP)
(72) Inventor: Owashi, Mikio, Yokohama Kanagawa-ken 221-8528 (JP); Katsumata, Noboru, Yokohama Kanagawa-ken 221-8528 (JP)
(74) Representative: Wagner, Karl H.

(57) **Abstract**

A wireless image transferring apparatus (100) includes a free-run transmitter (20) and a free-run receiver (70). The free-run transmitter (20) includes a marker appending unit (25) for appending a vertical synchronization marker to image data and a nondisplay period adjustment unit (26) for adjusting the length of nondisplay period of image data according to monitoring information supplied. The free-run receiver (70) includes a marker extraction unit (71) for extracting the vertical synchronization marker from the image data received and a marker position monitoring unit (72) for monitoring whether the position of a marker in the image data containing the vertical synchronization marker lies within a predetermined range or not and generating the monitoring information containing a synchronization adjustment amount used to expand or contract the nondisplay period of the image data such that the position of a marker lies within the predetermined range.

## Description

The present invention relates to a wireless image transferring apparatus, a wireless image receiving apparatus and the like capable of displaying a highly reliable object image.

Where a camera for picking up images of an object and a liquid crystal display (LCD) device or the like for displaying the images of an object picked up by the camera are separated away from each other, it is necessary that the data of object images captured by the camera be transferred from the camera to the display device within a desired time period.

For example, a conventional system implementing such a wireless image transferring method is a camera system where a synchronization signal generated on a display apparatus side is superposed together with a power supply voltage and the synchronization signal thus superposed with the supply voltage is sent to a camera side through a cable such as a coaxial cable. In this camera system, the video signals obtained from the object images picked up in the camera side are synchronized with a received synchronization signal so as to produce composite video signals, and the composite video signals are sent to a display apparatus side through the same coaxial cable.

In the display apparatus side, the composite video signals received through the coaxial cable are separated from signals belonging to the coaxial cable itself and the thus separated composite video signals are outputted to the LCD device so as to obtain reproduced images. Since the display apparatus side and the camera side are remotely positioned from each other in a monitoring apparatus or the like using such a camera system, the cable connecting both the display apparatus side and the camera side tends to be longer in general.

As a result, the position of video signal outputted to the display apparatus lags the original position for synchronization signal generated on the display apparatus side by a time duration equivalent to the time required for travelling back and forth along the length of coaxial cable. Such a delay causes a deviation in the phase relationship of chrominance subcarriers between color burst signals and video signals, and appears visually on the display apparatus, such as a monitor, as a hue difference. This may adversely affect the color reproducibility.

For example, known as a technique for adjusting the phase delay or the like due to the length of a transmission cable is a conventional technique where a marker is superposed and the thus superposed marker is sent from a camera side to a control apparatus side so as to measure the transmission delay time due to the transmission cable. In this conventional method for addressing the concern, a measurement result of transmission delay time is sent from the control apparatus to the camera side as a command. Then in the camera side, the phase of vide signals is advanced, in response to the this command, so as to be superposed on the synchronization signal. An example of such a technique as described above is proposed in the following reference (1).
(1) Japanese Patent Application Publication No. 2001-103573.

Where a transmitting side that wirelessly transmits camera image data or the like and a receiving side that receives the camera image data or the like transmitted wirelessly from the transmitting side are asynchronous and untuned with each other, there is concern that various kinds of inconvenience may be caused. With much deviation in synchronization therebetween, frames or the like that constitute a part of an object image are lost, for example, and the frames are displayed in an overlapped manner, thus causing a great deal of inconvenience such as degradation in the quality of images displayed.

For a camera system, such as an automotive rearview apparatus, which is required to display the object image in real time with high reliability, it is desired that such delay is reduced as much as possible.

The present invention has been made to solve the problems as mentioned above, and a purpose thereof is to provide a wireless image transferring apparatus, a wireless image receiving apparatus and the like capable of displaying real-time moving images with high quality and reduced delay.

A wireless image transferring apparatus according to an embodiment of the present invention comprises: a free-run transmitter including: a marker appending unit operative to append a vertical synchronization marker to image data; and a nondisplay period adjustment unit operative to adjust the length of nondisplay period of image data according to monitoring information supplied, wherein the free-run transmitter transmits the image data and receives the monitoring information; and a free-run receiver including: a marker extraction unit operative to extract the vertical synchronization marker from the image data received; and a marker position monitoring unit operative to monitor whether the position of a marker in the image data containing the vertical synchronization marker extracted by the marker extraction unit lies within a predetermined range or not and operative to generate the monitoring information containing a synchronization adjustment amount used to expand or contract the nondisplay period of the image data such that the position of a marker lies within the predetermined range in the event that the position of a marker lies outside the predetermined range, wherein the free-run receiver receives the image data and feeds back the monitoring information to the transmitter.

A wireless image transferring apparatus according to another embodiment of the present invention comprises: a free-run transmitter including: a marker appending unit operative to append a vertical synchronization marker to image data; and a nondisplay period adjustment unit operative to monitor whether or not the position of a marker in the image data containing the vertical synchronization marker in a receiving side lies within a predetermined range based on monitoring information supplied, and operative to adjust the position of a marker, by expanding or contracting the nondisplay period of the image data, in such a manner that the position of a marker lies within the predetermined range, in the event that the position of a marker lies outside the predetermined range, wherein the free-run transmitter transmits the image data and receives the monitoring information; and a free-run receiver including: a marker extraction unit operative to extract the vertical synchronization marker from the image data received; and a marker position monitoring unit operative to detect the position of a marker in the image data containing the vertical synchronization marker extracted by the marker extraction unit and operative to generate the monitoring information containing positional information indicating the detected position of a marker, wherein the free-run receiver receives the image data and feeds back the monitoring information to the transmitter.

In the wireless image transferring apparatus according to the above embodiment of the present invention, the predetermined range may preferably be a predetermined range in a vertical blanking interval.

In the wireless image transferring apparatus according to the above embodiment of the present invention, the nondisplay period adjustment unit may preferably adjust the length of nondisplay period by expanding or contracting a horizontal blanking interval in the vertical blanking interval.

In the wireless image transferring apparatus according to the above embodiment of the present invention, the nondisplay period adjustment unit may preferably adjust the length of nondisplay period by expanding or contracting termination timing of the nondisplay period of the image data such that the position of a marker lies within the predetermined range.

A wireless image receiving apparatus according to an embodiment of the present invention comprises: a marker extraction unit operative to extract a vertical synchronization marker contained in image data received; a marker position monitoring unit operative to monitor whether the position of a marker in the image data containing the vertical synchronization marker extracted by the marker extraction unit lies within a predetermined range or not and operative to generate monitoring information containing a synchronization adjustment amount used to expand or contract the nondisplay period of the image data such that the position of a marker lies within the predetermined range in the event that the position of a marker lies outside the predetermined range; and a free-run transmit-receive unit operative to receive the image data and transmits the monitoring information.

A wireless image receiving apparatus according to another embodiment of the present invention comprises: a marker extraction unit operative to extract a vertical synchronization marker contained in image data received; a marker position monitoring unit operative to generate monitoring information, containing positional information indicative of a marker position, by detecting the marker position in the image data containing the vertical synchronization marker extracted by the maker extraction unit; and a free-run transmit-receive unit operative to receive the image data and transmits the monitoring information.

In the wireless image receiving apparatus according to the above embodiment of the present invention, the marker position monitoring unit may preferably monitor whether the position of a maker lies within a predetermined range in a vertical blanking interval or not.

In the wireless image receiving apparatus according to the above embodiment of the present invention, the marker position monitor unit may preferably monitor whether or not the position of a marker lies within a predetermined period of vertical blanking interval in a manner such that a count value is sequentially counted up in response to a start of the vertical blanking interval and whether a count value corresponding to the marker position lies within a predetermined count value range or not is monitored.

A wireless image transmitting apparatus according to an embodiment of the present invention comprises: a marker appending unit operative to append a vertical synchronizing marker to image data; a nondisplay period adjustment unit operative to adjust the length of nondisplay period according to monitoring information supplied; and a free-run transmit-receive unit operative to transmit the image data and receives the monitoring information, wherein the monitoring information contains a synchronization adjustment amount used to expand or contract the nondisplay period of the image data such that the position of a marker lies within a predetermined range in the event that the position of a marker in the image data containing the vertical synchronization marker lies outside the predetermined range at a receiving side.

A wireless image transmitting apparatus according to another embodiment of the present invention comprises: a marker appending unit operative to append a vertical synchronizing marker to image data; a nondisplay period adjustment unit operative to monitor whether or not the position of a marker in the image data containing the vertical synchronization marker in a receiving side of the image data lies within a predetermined range based on monitoring information supplied, and operative to adjust the position of a marker, by expanding or contracting the nondisplay period of the image data, in such a manner that the position of a marker lies within the predetermined range in the event that the position of a marker lies outside the predetermined range; and a free-run transmit-receive unit operative to transmit the image data and receives the monitoring information, wherein the monitoring information contains positional information indicative of the position of a marker in the image data containing the vertical synchronization marker detected in the receiving side of the image data.

In the wireless image transmitting apparatus according to the above embodiment of the present invention, the nondisplay period adjustment unit may preferably adjust the length of nondisplay period by expanding or contracting a horizontal blanking interval in a vertical blanking interval.

In the wireless image transmitting apparatus according to the above embodiment of the present invention, the nondisplay period adjustment unit may preferably adjust the length of nondisplay period of the image data by expanding or contracting termination timing of nondisplay period of the image data in such a manner that the position of a marker lies within the predetermined range.

A wireless image transferring method according to an embodiment of the present invention includes: appending a vertical synchronization marker to image data to be transmitted by a free-run transmitter; extracting the vertical synchronization marker from the image data received by a free-run receiver; monitoring, by the receiver, whether the position of a marker in the image data containing the vertical synchronization marker extracted by the receiver in the extracting lies within a predetermined range or not; generating monitoring information, by the receiver, containing a synchronization adjustment amount used to expand or contract the nondisplay period of the image data such that the position of a marker lies within the predetermined range in the event that the position of a marker lies outside the predetermined range; feeding back the monitoring information, by the receiver, to the transmitter; and adjusting the length of nondisplay period of the image data, by the transmitter, according to the fed-back monitoring information.

A wireless image transferring method according to another embodiment of the present invention includes:
appending a vertical synchronization marker to image data to be transmitted by a free-run transmitter; extracting the vertical synchronization marker from the image data received by a free-run receiver; generating monitoring information, by the receiver, containing marker positional information in the image data containing the vertical synchronization marker extracted in the extracting; feeding back the monitoring information generated in the generating, by the receiver, to the transmitter; and monitoring, by the transmitter, whether the position of a marker in the image data containing the vertical synchronization marker in the receiver lies within a predetermined range or not, based on the fed-back monitoring information, and adjusting the length of nondisplay period of the image data by expanding or contracting the nondisplay period of the image data, in such a manner that the position of a marker lies within the predetermined range, in the event that the position of a marker lies outside the predetermined range.

A wireless image receiving method according to an embodiment of the present invention includes: extracting a vertical synchronization marker contained in image data received; monitoring whether the position of a marker in the image data containing the vertical synchronization marker extracted in the extracting lies within a predetermined range or not; generating monitoring information containing a synchronization adjustment amount used to expand or contract the nondisplay period of the image data such that the position of a marker lies within the predetermined range, in the event that the position of a marker lies outside the predetermined range; and transmitting the monitoring information generated in the generating.

A wireless image receiving method according to another embodiment of the present invention includes: extracting a vertical synchronization marker contained in image data received; generating monitoring information containing marker positional information in the image data that contains the vertical synchronization marker extracted in the extracting; transmitting the monitoring information generated in the generating.

A wireless image transmitting method according to an embodiment of the present invention includes: appending a vertical synchronization marker to image data to be transmitted; and adjusting the length of nondisplay period of the image data according to monitoring information supplied, wherein the monitoring information contains a synchronization adjustment amount used to expand or contract the nondisplay period of the image data such that the position of a marker lies within a predetermined range, in the event that the position of a marker in the image data containing the vertical synchronization marker lies outside the predetermined range at a receiving side of the image data.

A wireless image transmitting method according to another embodiment of the present invention includes: appending a vertical synchronization marker to image data to be transmitted; and monitoring whether or not the position of a marker in the image data containing the vertical synchronization marker in a receiving side of the image data lies within a predetermined range, based on monitoring information supplied; and adjusting the position of a marker, by expanding or contracting the nondisplay period of the image data, in such a manner that the position of a marker lies within the predetermined range in the event that the position of a marker lies outside the predetermined range, wherein the monitoring information contains positional information indicative of the position of a marker, detected in the receiving side of the image data, in the image data containing the vertical synchronization marker.

Embodiments will now be described by way of examples only, with reference to the accompanying drawings which are meant to be exemplary, not limiting, and wherein like elements are numbered alike in several Figures in which:
FIG. 1A illustrates a system structure of an automotive wireless image transferring apparatus;
FIG. 1B is a conceptual block diagram showing an exemplary structure of a marker position monitoring unit;
FIGS. 2A to 2D are timing charts conceptually showing a processing of image data carried out by a received signal processing unit;
FIGS. 3A to 3D illustrate cases where a marker is positioned outside a lower-limit-side range of a marker allowable range;
FIGS. 4A to 4D illustrate cases where a marker is positioned outside an upper-limit-side range of a marker allowable range;
FIG. 5 conceptually illustrates a frame structure of image data;
FIGS. 6A and 6B are conceptual diagrams schematically showing a deviation in synchronization between a transit-side vertical synchronization signal and a receive-side vertical synchronization signal;
FIG. 7 is a conceptual diagram showing an exemplary structure of a marker appending unit;
FIG. 8 is a flowchart conceptually showing a typical example of a counting operation of a marker position detection counter;
FIG. 9 is a flowchart showing a detailed operation of an automotive wireless image transferring apparatus;
FIG. 10 is a block diagram conceptually showing an exemplary structure of a blanking interval adjustment unit, in a transmitting side, according to a second embodiment of the present invention; and
FIG. 11 is a flowchart conceptually showing operations processed by an automotive wireless image transferring apparatus according to a second embodiment of the present invention.

The invention will now be described by reference to the preferred embodiments. This does not intend to limit the scope of the present invention, but to exemplify the invention.
An automotive wireless image transferring apparatus exemplified in each of embodiments described herein is of free-run type where an image pickup apparatus and a display apparatus operate based on their independent clocks. It is not necessary for the image pickup apparatus and the display apparatus exemplified herein to have dedicated microcomputers, dedicated memories and the like for synchronizing each other.

In this automotive wireless image transferring apparatus, an adjustment of taking or adjusting a predetermined synchronization between the image pickup apparatus and the display apparatus is made at an image pickup apparatus side by using a synchronization marker appended at the image pickup apparatus side and by carrying out a detection processing at a display apparatus side. Thus, even if a slight displacement occurs in the frequency or phase of each clock, the adjustment can be made such that the image pickup apparatus and the display apparatus are promptly synchronized with each other and their frequencies and/or clocks are aligned properly.

As a result, the signal delay where the image data fail to arrive in time for image display or the occurrence of overflow where the delay of image display relative to the image data can be reduced. Hence, the image degradation due to a so-called "frame loss" or "frame overlapping" is prevented, so that the images can be displayed with high quality. A detailed description is now given of embodiments with reference to the drawings.

It is to be noted that, in the description of the following embodiments, the image data may be not only data of practically effective images of an object but also those that include appended data, which accompany the image data, required for the transfer, communication, display and the like of other data.

### (First embodiment)

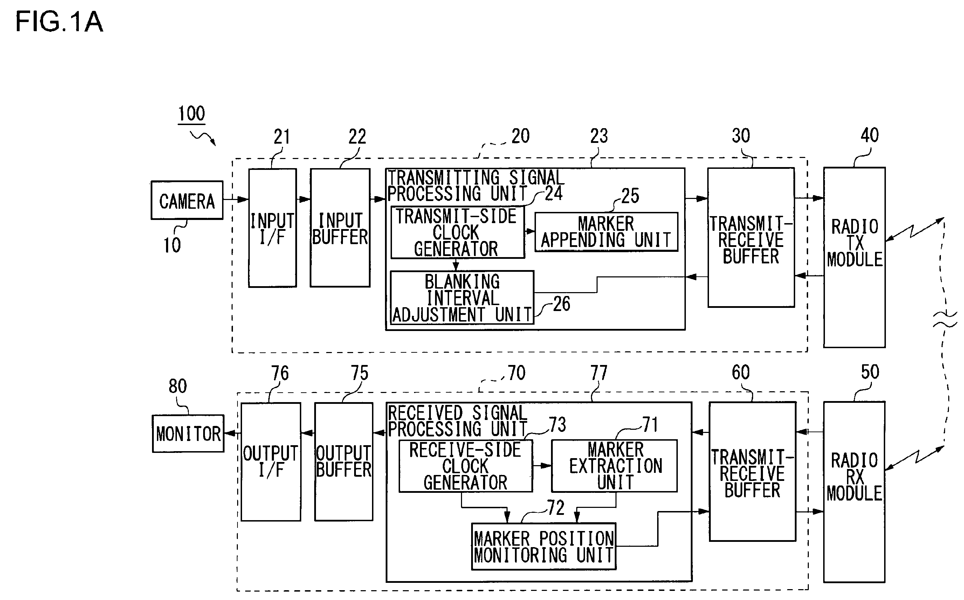

FIG. 1A illustrates a system structure of an automotive wireless image transferring apparatus 100. The automotive wireless image transferring apparatus 100 includes a rearview camera 10 provided at the back of a vehicle.

The image data of an object picked up by the camera 10 are inputted to a transmit-side unit 20 wherein the object is located in the back of the vehicle. The image data, which are subjected to a predetermined transmission processing and the like in the transmit-side unit 20, are temporarily stored in a transmit-receive buffer 30 and are wirelessly sent from a radio TX module 40.

The image data transmitted from the radio TX module 40 of the automotive wireless image transferring apparatus 100 are received by a radio RX module 50. The image data received by the radio RX module 50 are stored temporarily in a transmit-receive buffer 60 and are subjected to a predetermined receiving processing in a receive-side unit 70.

The image data processed by the receive-side unit 70 are displayed on a monitor 80 which is a display device such as a liquid crystal display (LCD), so that those image data can be viewed by a vehicle driver and the like. Viewing the monitor 80 allows the vehicle driver and the like to verify the safety and know the exact situation in the back of the vehicle.

The transmit-side unit 20 includes an input interface 21 for receiving the input of the image data sent from the camera. The transmit-side unit 20 also includes an input buffer 22 for temporarily storing the image data acquired via the input interface 21. The transmit-side unit 20 also includes a transmitting signal processing unit 23 for subjecting the image data, stored temporarily in the input buffer 22, to a signal processing such that the image data can be transmitted wirelessly.

The transmitting signal processing unit 23 includes a transmit-side clock generator 24 for generating a reference clock used to synchronize each device in the transmit-side unit 20. The transmitting signal processing unit 23 also includes a marker appending unit 25 for appending a vertical synchronization marker to the frame header of image data transmitted from the transmit-side unit 20. The transmitting signal processing unit 23 also includes a blanking interval adjustment 26 unit for adjusting a vertical blanking interval of the image data, based on the position of marker detected by a marker position monitoring unit 72, such that the marker is positioned within a predetermined range.

The receive-side unit 70 includes an output interface 76 for outputting the image data in order to display an object image on the monitor 80. The receive-side unit 70 also includes an output buffer 75 for temporarily storing the image data which are to be outputted to the output interface 76. The receive-side unit 70 also includes a received signal processing unit 77 for performing a predetermined processing on the received image data.

The received signal processing unit 77 includes a receive-side clock generator 73 for generating a reference clock used to synchronize each device in the receive-side unit 70. The received signal processing unit 77 also includes a marker extraction unit 71 for extracting the vertical synchronization marker affixed by the transmit-side unit 20, from the image data received.

The received signal processing unit 77 also includes a marker position monitoring unit 72 which detects where the vertical synchronization marker extracted by the marker extraction unit 71 is positioned in a series of serial image data including a receive-side vertical blanking interval. Monitoring information, which is information typically related to the positions of markers, detected by the marker monitoring unit 72 are fed back from the radio RX module 50 to the transmit-side unit 20 by way of the transmit-receiver buffer 60. The monitoring information to be fed back is received by the radio TX module 40 and inputted to the blanking interval adjustment unit 26 in the transmit-side unit 20 by way of the transmit-receive buffer 30. Note that the automotive wireless image transferring apparatus 100 may additionally include other structural components or functions in each unit and each device or between them, in addition to the above-described structural components.

In the above-described automotive wireless image transferring apparatus 100, the marker extraction unit 71 extracts the marker which has been appended to the header of image frame data by the marker appending unit 25. The marker position monitoring unit 72 monitors whether the marker extracted by the marker extraction unit 71 is positioned in a predetermined range or not.

If the marker does not lie in the predetermined range, the blanking interval adjustment unit 26 will adjust the length of only horizontal blanking interval in the vertical blanking interval of image data. As a result, the clock phase and the like of the entire image data processed by the receive-side unit 70 are adjusted and a clock synchronized with a clock in the transmit-side unit 20 is generated, thereby achieving synchronization between transmitting and receiving sides.

Also, there may be a plurality of cameras 10. If more than a single camera 10 are used, the clock phase and the like are adjusted according to a present relationship between the receiving-side unit 70 and one or more cameras 10 that transmit and receive the image data.

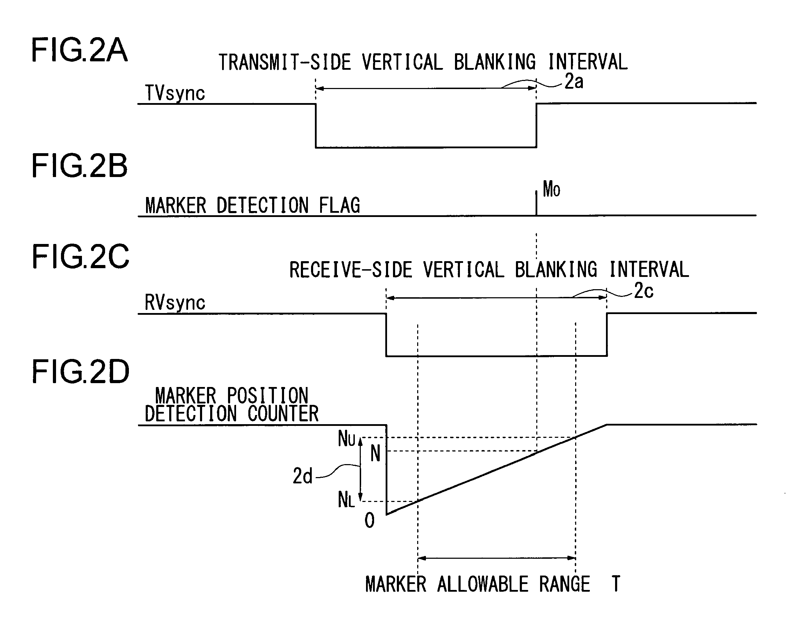

Referring to FIGS. 2A to 2D, a detailed description is now given of marker detection, monitoring processing and so forth performed by the maker position monitoring unit 72. FIGS. 2A to 2D are timing charts conceptually showing a processing of image data carried out by the received signal processing unit 77.

FIG. 2A is a timing chart showing a vertical synchronization signal (TV_{sync}) of image data transmitted from the radio TX module 40. As shown in FIG. 2A, in the transmit-side unit 20, the marker appending unit 25 appends a marker to the header of image frame data having a transmit-side vertical blanking interval 2a, based on the reference clock generated by the transmit-side clock generator 24. The marker appended by the marker appending unit 25 may be any marker-like signal as long as it can be recognized and extracted by the marker extraction unit 71.

As shown in FIG. 2B, in the receive-side unit 70, the marker extraction unit 71 sets a marker detection flag M₀ by detecting the marker from the image data received by the radio RX module 50. For example, the marker detection flag M₀ corresponding to the marker position may be a flag or the like that detects a rising edge or the like of the received image data. In such a case, as the transmit-side vertical blanking interval 2a ends, the rising edge itself of the image data may be thought of as a marker.

FIG. 2C is a timing chart showing a receive-side vertical synchronization signal (RV_{sync}) based on the reference clock generated by the receive-side clock generator 73. As shown in FIG. 2C, the receive-side unit 70 has a receive-side vertical blanking interval 2c based on a reference clock which is different from and independent of the transmit-side vertical blanking interval 2a.

In other words, the transmit-side unit 20 and the receive-side unit 70 are each a free-running unit. As a result, the phase and frequency of the synchronization signals in the transmit-side unit 20 and those in the receive-side unit 70 do not coincide completely with each other and therefore a subtle displacement (nonalignment) is caused therebetween. Particularly when the transmit-side unit 20 and the receive-side unit 70 are installed in different temperature environments, the frequency response thereof may differ in between the transmit-side unit 20 and the receive-side unit 70 due to the temperature-dependent characteristics of crystal oscillators. Suppose that the transmit-side unit 20 and the receive-side 70 are installed in different positions. For example, suppose that the transmit-side unit 20 is installed outside a vehicle and the receive-side unit 70 is installed inside the vehicle. Then there may be cases where the temperature environments for them differ greatly.

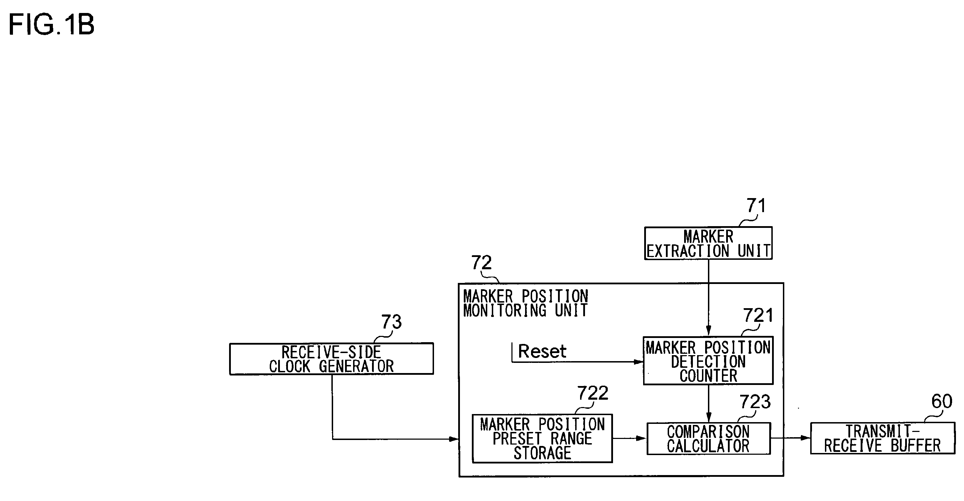

The marker position monitoring unit 72 is provided with a marker position detection counter 721 as shown in FIG. 1B for example so that the marker position can be detected as shown in FIG. 2D. FIG. 1B is a conceptual block diagram showing an exemplary structure of the marker position monitoring unit 72. The marker position detection counter 721 in the marker position monitoring unit 72 is reset to an initial value in synchronism with the start of receive-side blanking interval 2c, and counts up starting from "0", for instance.

If there is a marker detection flag M₀ extracted and set by the marker extraction unit 71, the marker position monitoring unit 72 will detect a count value N of the marker position detection counter 721 and thereby can verify the marker position. The marker position detection counter 721 is reset to the initial value at a falling edge of the vertical synchronization signal and can measure the marker position by counting up sequentially from the initial value "0" within the receive-side blanking interval 2c only.

That is, the marker position monitoring unit 72 has a comparison calculator 723 compare the count value N of the marker position detection counter 721 with a predetermined count value range 2d stored beforehand in a marker position preset range storage 722, and verifies that the marker detection flag M₀ lies within a marker allowable range T of the receive-side blanking interval 2c. In other words, the marker position monitoring unit 72 monitors whether or not the marker detection flag M₀ lies within the predetermined count value range 2d corresponding to within the marker allowable range T. The predetermined count value range 2d is a count value range between a count value NL, which corresponds to the lower limit of the marker allowable range T, and a count value Nu, which corresponds to the upper limit of the marker allowable range T. The marker position preset range storage 722 may comprise memory, such as flash memory, which is rewritable and erasable from outside. Also, the marker position preset range storage 722 may be such that the predetermined count value range 2d which is stored beforehand can be updated or upgraded as appropriate according to its usage environment, at the time of maintenance or the like.

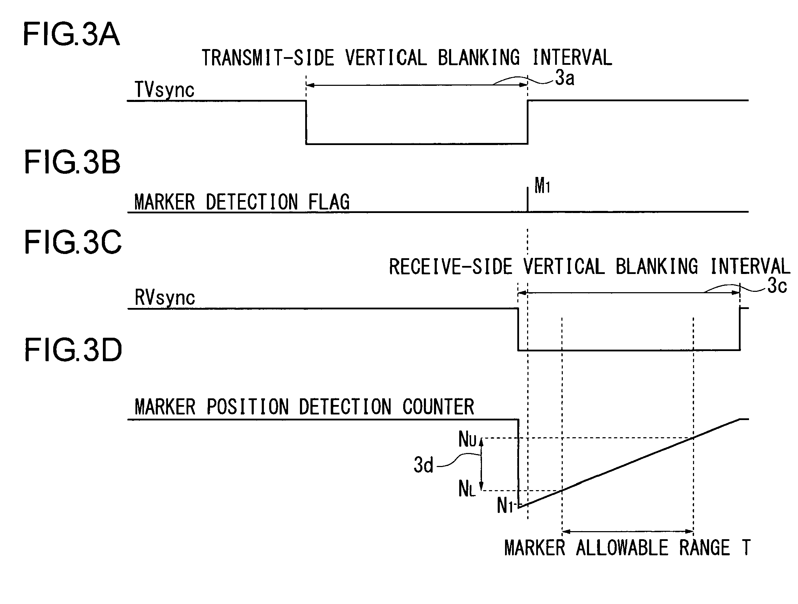

Referring to FIGS. 3A to 3D, a description is now given of adjustment processing performed, during a vertical blanking interval, based on the monitoring information which has been fed back. FIGS. 3A to 3D illustrate cases where a marker appended by the marker appending unit 25 in the transmit-side unit 20 is positioned outside the lower limit range of the predetermined marker allowable range T.

As shown in FIG. 3A, the marker appending unit 25 appends a marker to the end of a transmit-side vertical blanking interval 3a, namely the position corresponding to the header of image data having substantial information on the object image. The marker extraction unit 71 decodes and extracts a marker appended to the image data received by the receive-side unit 70, and sets a marker detection flag M₁.

In the example shown in FIG. 3C, the marker detection flag M₁ lies within a receive-side vertical blanking interval 3c but does not lie within the marker allowable range T and therefore it lies outside the lower limit NL. That is, the marker detection flag M₁ does not lie within a count value range 3d (a range between NL and Nu) corresponding to within the marker allowable range T, and indicates a count value N₁ which is less than the lower limit NL.

In this case, the blanking interval adjustment unit 26 expands the termination timing of the transmit-side vertical blanking interval 3a such that the termination of the receive-side vertical blanking interval 3c becomes relatively earlier. In other words, the blanking interval adjustment unit 26 expands the termination timing of the transmit-side vertical blanking interval 3a such that the termination timing of the receive-side vertical blanking terminal 3c is shifted to the left in FIG. 3C. This processing of expanding the termination timing of the transmit-side vertical blanking interval 3a delays the termination timing of the transmit-side vertical blanking interval 3a. As a result, the termination timing of the transmit-side vertical blanking interval 3a shown in FIG. 3A is shifted to the right.

Thus the synchronization between the transmit-side vertical blanking interval 3a, which has been expanded as above, and the receive-side vertical blanking interval 3c is adjusted, so that both the intervals 3a and 3c can be positioned within a deviation range in the predetermined marker allowable range T as shown in FIGS. 2C and 2D. Hence, the frame loss or frame overlapping can be suppressed at low cost without the use of a dedicated microcomputer for adjusting the synchronization, a dedicated buffer ring memory, a high-precision oscillator and the like.

Since the processing can be done without the use of a frame memory and the like, the delay otherwise caused due to the storage time of the frame memory can be reduced. Further, control is performed using the vertical blanking part only or more preferably the only horizontal blanking part thereof, on a clock-by-clock basis. As a result, no substantial image data is affected by this control. Also, the occurrence of color shift or the like is suppressed, thus achieving an advantageous effect of reducing the possibility of an adverse effect on the image quality.

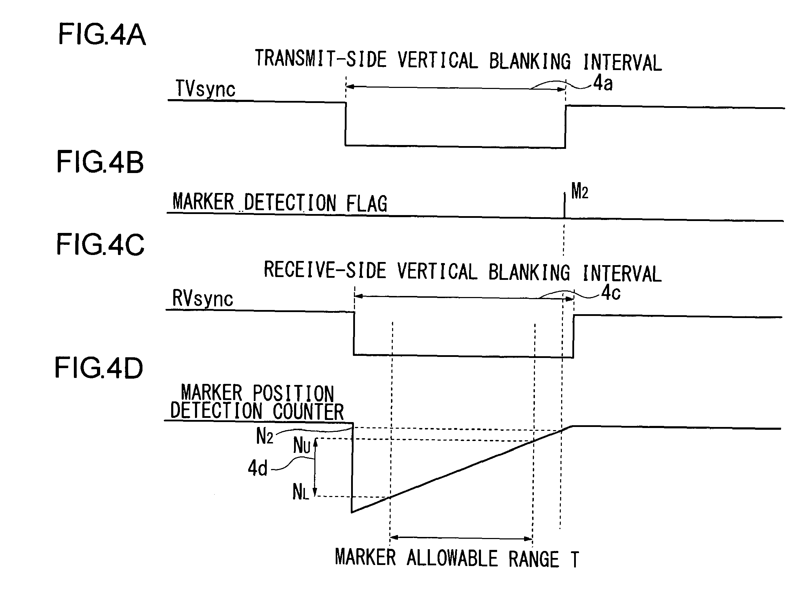

Referring to FIGS. 4A to 4D, a description is now given of another processing where the blanking interval adjustment unit 26 adjusts the vertical blanking interval. FIGS. 4A to 4D illustrate cases where a marker appended by the marker appending unit 25 in the transmit-side unit 20 is positioned outside the upper limit range of a predetermined marker allowable range T.

As shown in FIG. 4A, the marker appending unit 25 appends a marker to the end of a transmit-side vertical blanking interval 4a, namely the position corresponding to the header of image data having substantial information on the object image. The marker extraction unit 71 decodes and extracts a marker appended by the marker extraction unit 71, from the image data received by the receive-side unit 70, and sets a marker detection flag M₂.

In the example shown in FIG. 4C, the marker detection flag M₂ lies within a receive-side vertical blanking interval 4c but does not lie within the marker allowable range T and therefore it lies outside the upper limit Nu. That is, the marker detection flag M₂ does not lie within a count value range 4d (a range between NL and Nu) corresponding to within the marker allowable range T, and indicates a count value N₂ which exceeds the upper limit Nu.

In this case, the blanking interval adjustment unit 26 shortens the termination timing of the transmit-side vertical blanking interval 4a so that the termination of the receive-side vertical blanking interval 4c is relatively delayed. In other words, the blanking interval adjustment unit 26 shortens the termination timing of the transmit-side vertical blanking interval 4a so that the termination of the receive-side vertical blanking interval 4c is shifted to the right in FIG. 4C.

Thus, both the transmit-side vertical blanking interval 4a and the receive-side vertical blanking interval 4c can be positioned within the deviation range in the predetermined marker allowable range T as shown in FIGS. 2C and 2D. Also, the processing is executed without the use of the frame memory and the like, so that the delay caused otherwise can be reduced. Further, control is performed using a blanking part only on a clock-by-clock basis. As a result, the effect of this control on the substantial image data is minimized. Also, the occurrence of color shift or the like is suppressed, thus achieving an advantageous effect of reducing the possibility of an adverse effect on the image quality.

In the above explanation in conjunction with FIG. 2A to FIG. 4D, the marker allowable range T is preferably set narrower in consideration of the time required for feedback communication between a transmitting side and a receiving side such that the synchronization is adjusted before the deviation in synchronization becomes too large. For example, if the time required for feedback communication between a transmitting side and a receiving side is long, it is preferable that the marker allowable range T is set to a significantly narrow range; if the time required for feedback communication therebetween is not long, it is preferable that the marker allowable range T is not set to too narrow a range.

As a result, even in the cases where the time required for feedback communication between the transmitting side and the receiving side is long, the synchronization can be adjusted at an earlier stage on the assumption that the deviation in synchronization increases further during this time period required for communication. Hence, the image data can be communicated in real time with a reduced delay in synchronization. Also, in the cases where the time required for feedback communication therebetween is not long, the image data can be communicated in real time with a reduced delay in synchronization even if the marker allowable range T is not much narrowed. In this case, the transmitting side and the receiving side are synchronized within a desired delay range even if the frequency at which the synchronization is adjusted is reduced. This is desirable in that power is saved and synchronization adjustment is achieved with a reduced computational load.

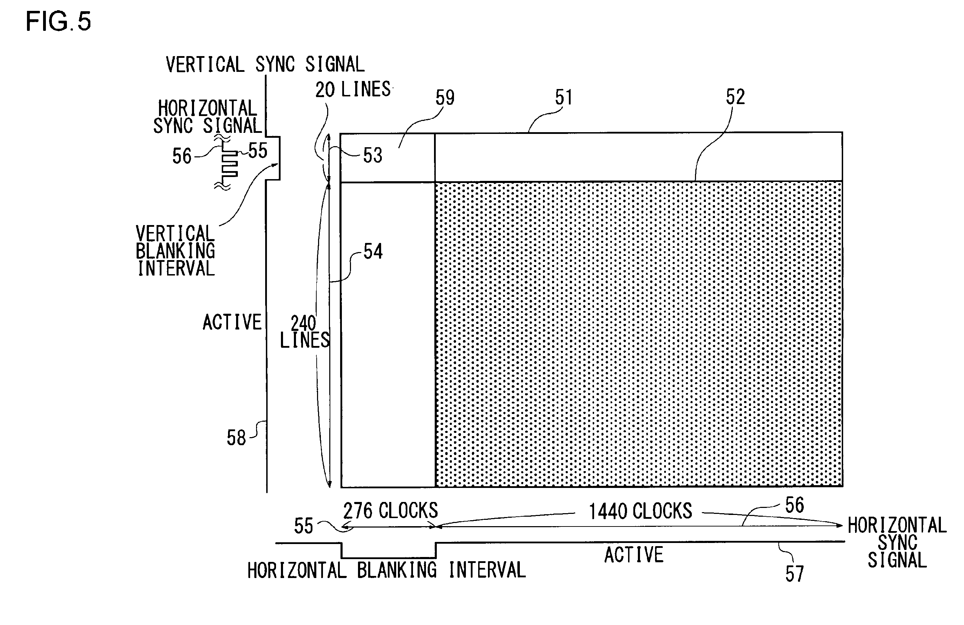

A brief description is now given of a structure of image frames (or image field) processed by the automotive wireless image transferring apparatus 100. FIG. 5 conceptually illustrates a frame 51 structure of image data.

As shown in FIG. 5, a vertical synchronization signal 58 in the receive-side unit 70 has about 260 lines. The vertical synchronization signal 58 includes an active part 54 composed of 240 lines and a vertical blanking part 53 composed of about 20 lines.

A horizontal synchronization signal 57 in the receive-side unit 70, which is equivalent to about 1,720 clocks, includes a vertical blanking part 55 composed of about 276 clocks and an active part 56 composed of about 1,440 clocks. The active part 54 and the active part 56 constitute an active region 52 of an image frame. Image data associated with the active region 52 practically have information on an object image and practically correspond to a display period of an image.

Also, the vertical blanking part 53 has a horizontal synchronization signal 57 of about 20 lines, so that the vertical blanking part 53 includes a horizontal blanking part 55 of about 20 lines and an active part of about 20 lines.

The blanking interval adjustment unit 26 adjusts only the horizontal blanking interval within a vertical blanking interval. That is, the blanking interval adjustment unit 26 advances or delays, clock by clock, the rearmost part of the vertical blanking part 53 (i.e., the transmit-side blanking interval) for only the horizontal blanking part 55 within a vertical blanking part 53.

Specifically, at the transmitting side, the blanking interval adjustment unit 26 expands or contracts the termination timing of the vertical blanking part 53 for a blanking interval associated with a blanking area 59 as shown in FIG. 5 in such a manner that approximately 3 to 5 is added to or subtracted from the count value measured and counted by the clock count.

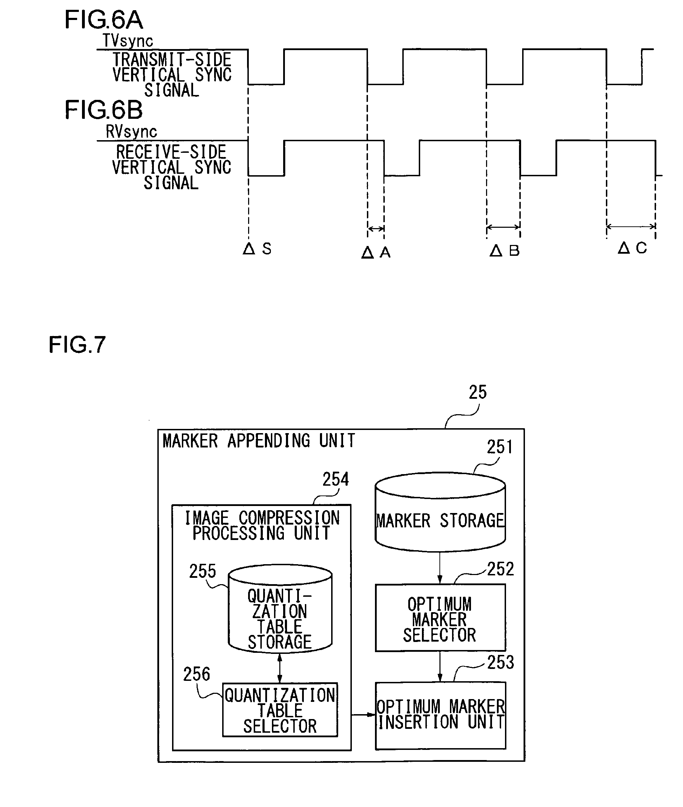

As a result, the state as shown in FIG. 6 can be prevented where the deviation in synchronization accumulates sequentially and the amount of deviation in synchronization gradually increases in the automotive wireless image transferring apparatus 100. FIGS. 6A and 6B are conceptual diagrams schematically showing a deviation in synchronization between a transit-side vertical synchronization signal and a receive-side vertical synchronization signal. As shown in FIG. 6, although the synchronization does not suffer from any deviation at first (ΔS=0), the synchronization differs by ΔA at the next rising edge because the properties of oscillation clocks differ due to the temperature difference and other factors.

This deviation in synchronization increases to ΔB (ΔB=2×ΔA) at the next falling edge and further increases to ΔC (ΔC=3×ΔA) at the next falling edge. Generally, the synchronization deviation arising from clock phase difference and other factors accumulates and increases with time, as described above, if left uncontrolled.

However, when the synchronization deviation lies outside a predetermined range, the automotive wireless image transferring apparatus 100 adjusts, at the transmitting side, the clock count of the counter that counts the vertical blanking interval. As a result, the automotive wireless image transferring apparatus 100 can eliminate or reduce the synchronization deviation by expanding or contracting the vertical blanking interval.

Note that the blanking region 59 corresponds to the blanking intervals for both the vertical direction and the horizontal direction. Thus, the blanking region 59, which practically does not contain information on the object image, corresponds to the nondisplay period of images.

A detailed description is now given of a processing performed by the marker appending unit 25. FIG. 7 is a conceptual diagram showing an exemplary structure of the marker appending unit 25. Referring to FIG. 7, the marker appending unit 25, including an image compression processing unit 254, may append a vertical synchronization marker as an image compression processing has been performed. An optimum marker selector 252 in the marker appending unit 25 selects an optimum maker from among a plurality of markers stored beforehand in a marker storage 251.

An optimum marker insertion unit 253 inserts the thus selected optimum marker into data. The optimum marker may be, for instance, FFFF_FF or the like which is identifiable by the marker extraction unit 71. An image compression processing unit 254 in the marker appending unit 25 performs compression processing using quantization information that the image compression processing unit 254 stores beforehand in a quantization table storage 255 per macroblock.

In so doing, the quantization table selector 256 selects a quantization table applied to a color-difference block of the macroblock. The optimum marker insertion unit 253 combines the image compression information of the image compression processing unit 254 and the marker selected by the optimum marker selector 252 so as to be inserted into the data.

As described above, the vertical synchronization marker may be structured by including an identifier field such as FFFF_FF, a quantization table selection information field and an ancillary data field containing other arbitrary information.

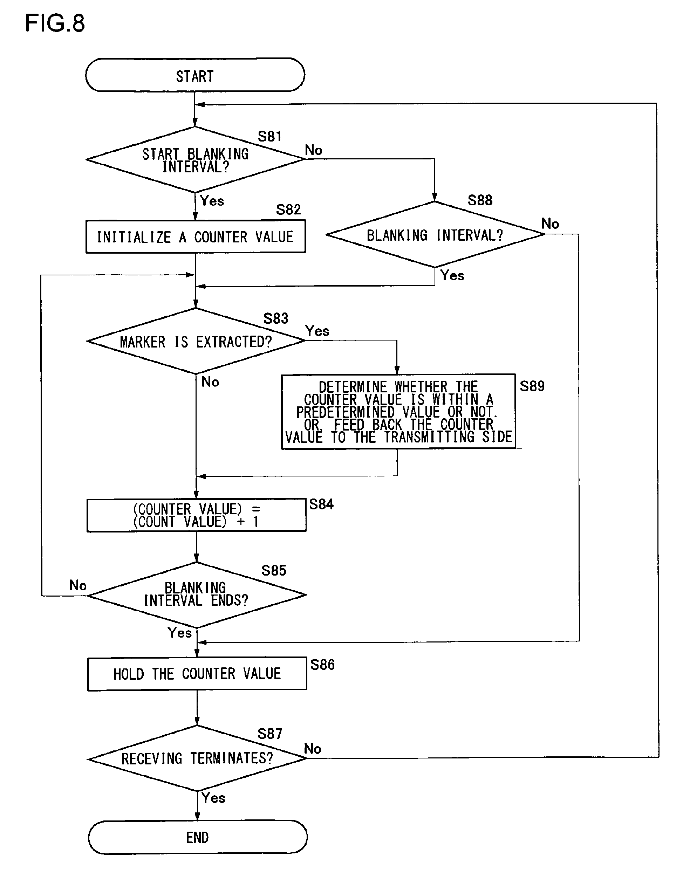

Subsequently, referring to FIG. 8 a detailed description is given of an exemplary counting operation of the marker position detection counter 721 included in the marker position monitoring unit 72. FIG. 8 is a flowchart conceptually showing a typical example of a counting operation outline of the marker position detection counter 721.

### (STEP S81)

The marker position monitoring unit 72 determines if a vertical blanking interval has started or not. The marker position monitoring unit 72 may detect the start of the vertical blanking interval by detecting a falling edge of vertical synchronization signal caused by the start of the vertical blanking interval, for instance. Once the vertical blanking interval starts, proceed to Step S82. If the vertical blanking interval does not start, proceed to Step S88.

### (STEP S82)

The marker position detection counter 721 initializes the counter value (typically to the count value of "0") by a reset signal generated as a result of detection of the start of a vertical blanking interval.

### (STEP S83)

The marker position monitoring unit 72 determines whether the marker extraction unit 71 has extracted a marker or not. For instance, the marker monitoring unit 72 determines whether or not there has been an input of detection signal indicating that the marker extraction unit 71 has extracted a marker.

If the marker is not extracted, proceed to Step S84. If the marker is extracted, proceed to Step S89.

### (STEP S84)

The marker position detection counter 721 adds "1" to the current count value and then sets this count value added with "1" as a new count value. In other words, the marker position detection counter 721 counts up sequentially by adding "1" to the current count value.

### (STEP S85)

The marker position monitoring unit 72 determines whether the vertical blanking interval has ended or not. The marker position monitoring unit 72 may detect, for example, a rising edge of vertical synchronization signal resulting from the termination of a vertical blanking interval and thereby may detect the termination of the vertical blanking interval. If the vertical blanking interval ends, proceed to Step S86. If the vertical blanking interval does not end, return to Step S83.

### (STEP S86)

The marker position detection counter 721 holds the counter value.

### (STEP S87)

The received signal processing unit 77 determines whether the receiving of image data has terminated or not. If the receiving of image data terminates, the flow of count-up operation of the marker position detection counter 721 during the vertical blanking interval will be terminated. If the receiving of image data does not terminate, return to Step S81.

### (STEP S88)

The marker position monitoring unit 72 determines whether or not the image data is in a blanking interval at the receiving side. If the image data is in a blanking interval, proceed to Step S83. If not in a blanking interval, proceed to Step S86.

### (STEP S89)

The comparison calculator 723 in the marker position monitoring unit 72 determines whether or not the counter value is within the count value range 2d corresponding to the marker allowable range T. Assume herein that the count value range 2d is stored beforehand in the marker position preset storage 722 of the marker position monitoring unit 72. The same holds true for the cases of predetermined count value range 3d and 4d, and the predetermined count value ranges 2d, 3d and 4d may be identical to each other.

If whether the marker position lies within a predetermined range or not is to be determined in the receiving side, the marker position monitoring unit 72 will execute the above-described processings and feed back the deviation amount from the marker allowable range T, to the transmitting side as the monitoring information.

If whether the marker position lies within a predetermined range or not is not determined in the receiving side, the receive-side unit 70 will feed back the counter value to the transmitting side. That is, the receive-side unit 70 feeds back the information on a marker position (hereinafter referred to as "marker positional information" also) to the transmitting side as the monitoring information. In such a case, the counter value is a typical example of marker positional information. That is, if whether the marker position lies within a predetermined range or not is determined in the transmitting side, the receive-side unit 70 will feed back the marker positional information to the transmitting side as the monitoring information. This processing will be described in detail later, so that the description thereof is omitted here.

As has already been described in Step S89, the receive-side unit 70 in the automotive wireless image transferring apparatus 100 may calculate the deviation amount from the marker allowable range T and the required adjustment amount associated with this deviation amount. As has already been described in Step S89, the receive-side unit 70 in the automotive wireless image transferring apparatus 100 may detect the marker position only. Then it may feed back the marker positional information (typically the counter value) to the transmit-side unit 20, and the transmit-side unit 20 may calculate the deviation amount from the marker allowable range T and the required adjustment amount associated with this deviation amount.

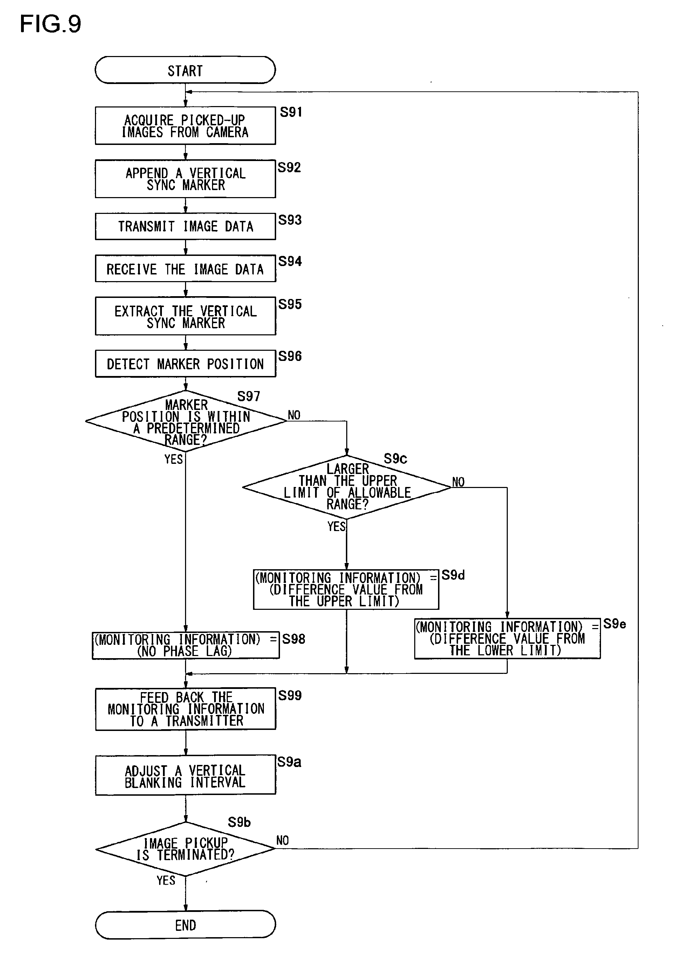

Next, using FIG. 9 a detailed description is given of a case where the deviation amount from the marker allowable range T and the necessary adjustment amount associated therewith are calculated by the receive-side unit 70. FIG. 9 is a flowchart showing a detailed operation of the automotive wireless image transferring apparatus 100. The operation thereof will be described following each step in FIG. 9.

### (STEP S91)

The transmit-side unit 20 acquires the picked-up images of an object from the camera 10 through the input I/F 21 and the input buffer 22. The camera 10, which is comprised of solid-state image sensing devices such as CCD (Charge-Coupled Device) or CMOS (Complementary Metal-Oxide Semiconductor) image sensors, performs photoelectric conversion of light from the object so as to output electric signals. The transmit-side unit 20, which is provided with the transmit-side clock generator 24, free-runs responsive to a clock that depends on crystal temperature characteristics according to an installation environment of the transmit-side unit 20. Assume that a crystal has a temperature dependency of oscillation frequency on the order of ppm or so.

### (STEP S92)

The marker appending unit 25 appends a vertical synchronization marker to image data to be sent. The marker appending unit 25 may append the vertical synchronization marker at the termination timing of a vertical blanking interval and at the timing corresponding to a rising edge of image data. That is, the marker appending unit 25 in the transmitting signal processing unit 23 assigns the vertical synchronization marker to a header portion of active data which is practically effective object image data.

### (STEP S93)

The transmit-side unit 20 transmits the image data to which the vertical synchronization marker has been appended, to the radio TX module 40 via the transmit-receive buffer 30.

### (STEP S94)

The receive-side unit 70 receives the vertical-synchronization-marker-appended image data transmitted from the transmit-side unit 20, via the radio RX module 50. The image data received are temporarily stored in the transmit-receive buffer 60 of the receive-side unit 70 and then are processed by the received signal processing unit 77. The receiver-side unit 70 and the transmit-side unit 20 are each configured to free-run independently, so that they operate based on different reference clocks generated by the different clock generators.

### (STEP S95)

The marker extraction unit 71 in the received signal processing unit 77 extracts the vertical synchronization marker from the image data. As the marker extraction unit 71 extracts the vertical synchronization marker, it sets the marker detection flag M₀ as shown in FIG. 2B, for instance.

### (STEP S96)

The marker position monitoring unit 72 detects the position of the marker extracted by the marker extraction unit 71. For example, the marker position monitoring unit 72 monitors the marker position in such a manner that the correspondence is detected between the marker detection flag M₀ set by the marker extraction unit 71 and a proper count value of the marker position detection counter 721, which is reset at the start of a receive-side blanking interval and counts up starting from there. Specifically, the monitoring unit 72 detects which count value of the marker position detection counter 721 corresponds to the marker detection flag M₀.

### (STEP S97)

The marker position monitoring unit 72 determines whether the marker position is within a predetermined range or not. If the marker position is within the predetermined range, proceed to Step S98. If the marker position is not within the predetermined range, proceed to Step S9c.

For example, the comparison calculator 723 compares the predetermined count value range 2d corresponding to the marker allowable range T stored in the marker position preset range storage 722 with the counter value of the marker position detection counter 721 corresponding to the marker detection flag M₀. As a result of comparison made by the comparison calculator 723, if the counter value corresponding to the marker detection flag M₀ is within the predetermined count value range 2d, proceed to Step S98. As a result of comparison made by the comparison calculator 723, if the counter value corresponding to the marker detection flag M₀ is not within the predetermined count value range 2d, proceed to Step S9c.

### (STEP S98)

The comparison calculator 723 generates data, as monitoring information, indicating that there is no phase lag and then sends the thus generated data to the transmit-receive buffer 60.

### (STEP S99)

The receive-side unit 70 transmits the monitoring information generated in the above-described S98 to the transmit-side unit 20 through the radio RX module 50 in a feedback manner.

### (STEP S9a)

The blanking interval adjustment unit 26 adjusts a horizontal blanking interval in the vertical blanking interval of the transmit-side vertical synchronization signal, based on the fed-back monitoring information. Typically, the blanking interval adjustment unit 26 advances or delays the termination timing of the transmit-side horizontal blanking interval in such a manner that 3 or so is added to or subtracted from the count value measured and counted by the clock count.

Advancing or delaying the termination timing of the horizontal blanking interval by the blanking interval adjustment unit 26 allows advancing or delaying the termination timing of the vertical blanking interval. The vertical blanking interval is a period during which there is practically no image data. Hence, the above-described processing reduces adverse effects on the image data itself and enables the adjustment of synchronizing the timing between the transmitting side and the receiving side.

It is to be noted here that a counter for measuring the time of a blanking interval and the like includes an up-count terminal and a down-count terminal which forcibly count up and count down the count value, respectively, in addition to a clock terminal to which the clock signal to be counted is inputted.

The blanking interval adjustment unit 26 can count up or down the count value by inputting a trigger to the up-count terminal or down-count terminal of the counter. As a result, at the transmitting side, the blanking interval adjustment unit 26 can extend or shorten the blanking interval.

Note that the adjustment made by the blanking interval adjustment unit 26 continues to be done until the marker detection flag is contained within a predetermined range. For this reason, a process for verifying and monitoring whether the marker detection flag is positioned within the predetermined range or not may be further implemented.

The received signal processing unit 77 performs processing on the image data which have been received and decoded so that a desired image display can be achieved. Then image data suitable for image display are obtained as a result of the processing. The receive-side unit 70 has the monitor 80 display the image data via the output interface 76. As described above, the timing of the image data is adjusted by the transmit-side unit 20 so that the timing thereof in the receive-side unit 70 becomes approximately synchronized with the transmit-side clocks within a predetermined allowable range. Hence, high-quality real-time display can be achieved without delay.

### (Step S9b)

If the real-time display of an object image is done with high image quality and then the image pickup of the object is terminated, this processing flow on synchronization adjustment will be terminated. If the image pickup thereof is not terminated, return to Step S91. Note that the aforementioned each processing of synchronization adjustments can be performed in parallel while the image is being displayed on the monitor 80.

### (Step S9c)

The comparison calculator 723 determines whether or not the counter value N of the marker position detection counter 721 corresponding to the marker detection flag M₀ set by the marker extraction unit 71 is larger than the upper limit Nu of the predetermined count value range 2d corresponding to the marker allowable range T stored in the marker position preset range storage 722.

If the comparison calculator 723 determines that the counter value N of the marker position detection counter 721 corresponding to the marker detection flag M₀ set by the marker extraction unit 71 is larger than the upper limit Nu of the predetermined count value range 2d corresponding to the marker allowable range T stored in the marker position preset range storage 722, proceed to Step S9d. If, on the other hand, the comparison calculator 723 determines that the counter value N of the marker position detection counter 721 corresponding to the marker detection flag M₀ set by the marker extraction unit 71 is not larger than the upper limit Nu of the predetermined count value range 2d corresponding to the marker allowable range T stored in the marker position preset range storage 722, proceed to Step S9e.

### (Step S9d)

The comparison calculator 723 calculates the difference between the counter value N of the marker position detection counter 721 corresponding to the marker detection flag M₀ set by the marker extraction unit 71 and the upper limit Nu of the predetermined count value range 2d, and generates transmit data with its difference value as the monitoring information.

### (Step S9e)

The comparison calculator 723 calculates the difference between the counter value N of the marker position detection counter 721 corresponding to the marker detection flag M₀ set by the marker extraction unit 71 and the lower limit NL of the predetermined count value range 2d, and generates transmit data with its difference value as the monitoring information.

The automotive wireless image transferring apparatus 100 exemplified in this first embodiment uses the vertical synchronization marker received together with the image data by the receive-side unit 70 to calculate an amount of deviation in synchronization from the transmitting side. Then the thus calculated amount of deviation in synchronization or the like is fed back to the transmit-side unit 20. Thus the transmit-side unit 20 can adjust the vertical blanking interval at the transmitting side by counting it up or counting it down by the count corresponding strictly to the thus fed-back amount of deviation in synchronization.

Thus the receive-side unit 70 can maintain the synchronization in real time with the transmit-side unit 20 within a desired range. Hence the receive-side unit 70 no longer needs to have storage devices therein, used to adjust the phase, such as a high-capacity buffer ring memory. As a result, the apparatus can be lighter in weight and smaller in size.

Also, if the monitoring information fed back from the receive-side unit 70 in the aforementioned Step S9a is information indicating that the phase lag is within a predetermined range, there will be no need for the transmitting side to adjust the deviation in synchronization. If, on the other hand, the monitoring information fed back from the receive-side unit 70 in the aforementioned Step S9a is information indicating a deviation amount, for example, where the counter value N exceeds the upper limit Nu of the predetermined count value range 2d, the blanking interval adjustment unit 26 may adjust the synchronization in a manner such that the marker detection flag M₀ is within the predetermined count value range 2d and is in the neighborhood of the lower limit NL of the predetermined count value range 2d after the predetermined count value range 2d is added to the deviation amount.

The deviation in synchronization is typically caused by the phase misalignment of each clock between the transmit-side unit 20 and the receive-unit 70, and this misalignment tends to be almost constant under a constant temperature environment. Accordingly, if the counter value N exceeds the upper limit Nu of the predetermined count value range 2d and therefore the deviation amount is detected by the marker position monitoring unit 72, the similar misalignment pattern is likely to continue for at least a certain period of time.

Thus the comparison calculator 723 may feed back a count value, which is derived by adding the predetermined count value range 2d to the difference (deviation amount) between the predetermined count value range 2d and the counter value N exceeding the upper limit Nu thereof, as the monitoring information. Also, in this case, the blanking interval adjustment unit 26 may adjust the blanking interval by an amount corresponding to the monitoring information fed back. Hence, no adjustment will be required until the next synchronization adjustment becomes necessary, so that the frequency of adjustment of blanking interval can be reduced. Since the frequency of adjustment of blanking interval can be reduced, the computational load and communication load can be reduced, which in turn saves the power of the automotive wireless image transferring apparatus 100.

### (Second embodiment)

A description is next given of a case, according to a second embodiment, where the synchronization adjustment amount is calculated based on the marker position and so forth by a transmit-side unit 20. That is, in the second embodiment, a receive-side unit 70 detects the marker position only and feeds back the marker positional information (typically the counter value) to the transit-side unit 20, and the transmit-side unit 20 calculates a deviation amount from a marker allowable range T and a necessary adjustment amount associated with the deviation amount. A description is hereinbelow given of the second embodiment centering around differences from the automotive wireless image transferring apparatus 100 exemplified in the first embodiment. And components identical to or equivalent to those of the first embodiment are given the same reference numerals and the repeated explanation thereof is omitted here.

In an automotive wireless image transferring apparatus 100 according to the second embodiment, a marker position monitoring unit 72 needs to feed back only a count value N of a marker position detection counter 721 corresponding to the position of the marker detection flag M₀ of the vertical synchronization maker. Thus the automotive wireless image transferring apparatus 100 according to the second embodiment may not be provided with the two structural components, namely, a marker position preset range storage 722 and a comparison calculator 723 in the marker position monitoring unit 72 as shown in FIG. 1B. As a result, the computational load in a monitor 80 side is reduced and the signals in the transmitting side and those in the receiving side can be synchronized even in a multi-camera system comprising a single monitor 80 for a plurality of cameras, for instance. A description is now given of a blanking interval adjustment unit 26 in the transmitting side that calculates the deviation amount from the marker allowable range T and the required adjustment amount associated with this deviation amount.

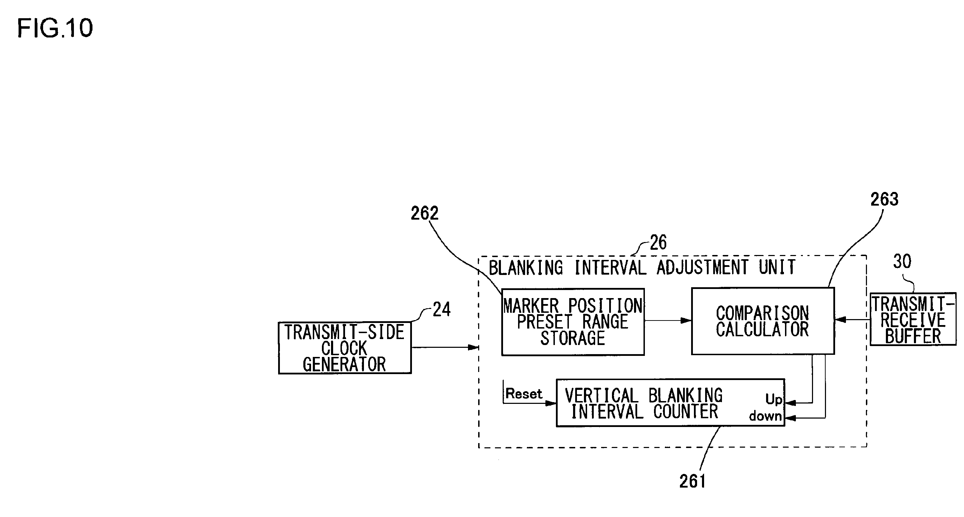

FIG. 10 is a block diagram conceptually showing an exemplary structure of the blanking interval adjustment unit 26, in the transmitting side, according to the second embodiment. As shown in FIG. 10, the blanking interval adjustment unit 26 includes a marker position preset range storage 262 that stores a predetermined count value range 2d corresponding to the marker allowable range T. Here, the same applies to predetermined count value ranges 3d and 4d. The blanking interval adjustment unit 26 also includes a comparison calculator 263 that compares the count value N fed back through a transmit-receive buffer 30 with the count value range 2d stored in the marker position preset range storage 262.

A vertical blanking interval counter 261 includes a reset terminal which is reset-inputted in response to the start of a transmit-side vertical blanking interval, an up-count terminal which advances the count, and a down-count terminal which delays the count. The comparison calculator 263 determines whether the count is to be advanced or delayed, based on the above comparison result, and calculates the extent to which the adjustment amount is expanded or contracted. In accordance with the thus calculated expansion/contraction adjustment amount, the comparison calculator 263 outputs a trigger to the up-count terminal or down-count terminal. Then the comparison calculator 263 adjusts the count value of the vertical blanking interval counter 261 so as to adjust preferably the horizontal blanking interval in a transmit-side vertical blanking interval.

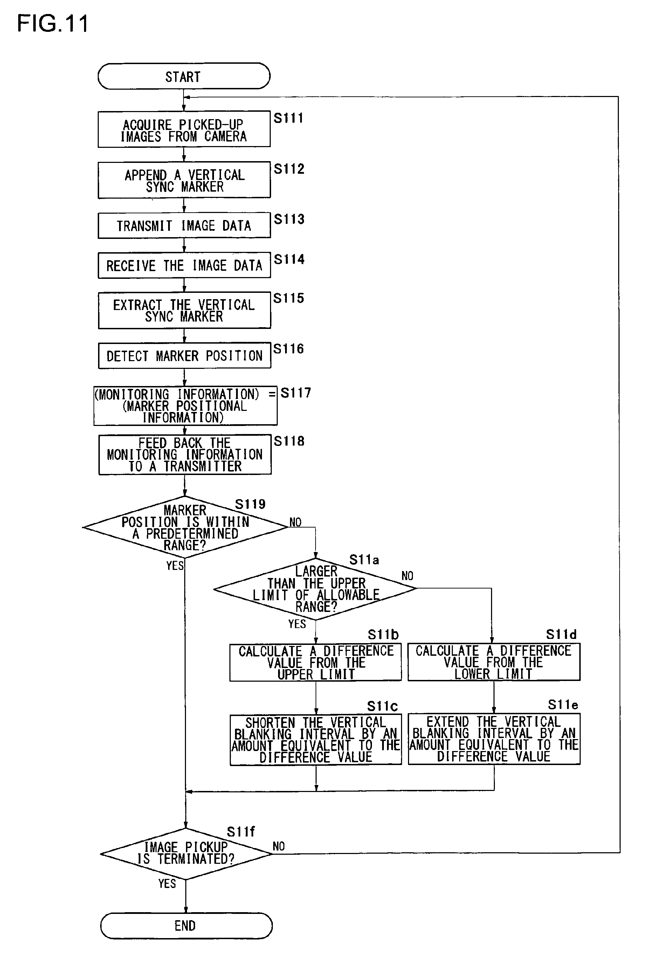

FIG. 11 is a flowchart conceptually showing operations processed by the automotive wireless image transferring apparatus 100 according to the second embodiment. Based on each step shown in FIG. 11, a description is now given hereinbelow of operations processed by the automotive wireless image transferring apparatus 100 according to the second embodiment. As for the processings identical or equivalent to those of the first embodiment, the explanation thereof will be simplified using the description in conjunction with FIG. 9.

### (Step S111)

The description of Step S111 is the same as that of Step S91, so that the repeated explanation thereof is omitted here.

### (Step S112)

The description of Step S112 is the same as that of Step S92, so that the repeated explanation thereof is omitted here.

### (Step S113)

The description of Step S113 is the same as that of Step S93, so that the repeated explanation thereof is omitted here.

### (Step S114)

The description of Step S114 is the same as that of Step S94, so that the repeated explanation thereof is omitted here.

### (Step S115)

The description of Step S115 is the same as that of Step S95, so that the repeated explanation thereof is omitted here.

### (Step S116)

The description of Step S116 is the same as that of Step S96, so that the repeated explanation thereof is omitted here.

### (Step S117)

The marker position monitoring unit 72 regards the count value N corresponding to the position of the marker detection flag M₀ extracted and set by the marker extraction unit 71, as the monitoring information. That is, the marker position detection counter 721 in the marker position monitoring unit 72 counts up sequentially in response to the start of the vertical blanking interval 2c, and detects the count value N corresponding to the marker detection flag M₀. Note that in the second embodiment the same processing is carried out for both the count value N₁ corresponding to the marker detection flag M₁ and the count value N₂ corresponding to the marker detection flag M₂.

### (Step S118)

The receive-side unit 70 feeds back the monitoring information generated in the above-described Step S117, to the transmit-side unit 20 via the radio RX module 50. Here, the monitoring information fed back to the transmit-side unit 20 by the receive-side unit 70 is the count value N corresponding to the marker detection flag M₀. This is the marker positional information that does not require heavy calculation and therefore the computational load of the receive-side unit 70 is minimized.

### (Step S119)

The comparison calculator 263 determines whether the fed-back marker positional information (typically the count value N) is within a predetermined range (typically the predetermined count value range 2d) or not. If the marker position is within the predetermined range, proceed to Step S11f. If the marker position is not within the predetermined range, proceed to Step S11a.

For example, the comparison calculator 263 compares the predetermined count value range 2d corresponding to the marker allowable range T stored beforehand in the marker position preset range storage 262 with the counter value N of the marker position detection counter 721, which has been sent by a feedback, corresponding to the marker detection flag M₀ set by the marker extraction unit 71. As a result of comparison made by the comparison calculator 263, if the counter value N corresponding to the marker detection flag M₀ is within the predetermined count value range 2d, proceed to Step S11f. As a result of comparison made by the comparison calculator 263, if the counter value N corresponding to the marker detection flag M₀ is not within the predetermined count value range 2d, proceed to Step S11a.

### (STEP S11a)

The comparison calculator 263 determines whether or not the fed-back counter value N is greater than the upper limit Nu of the predetermined count value range 2d corresponding to the marker allowable range T stored in the marker position preset range storage 262.

If the comparison calculator 263 determines that the fed-back counter value N is greater than the upper limit Nu of the predetermined count value range 2d corresponding to the marker allowable range T stored in the marker position preset range storage 262, proceed to Step S11b. If, on the other hand, the comparison calculator 263 determines that the fed-back counter value N is not greater than the upper limit Nu of the predetermined count value range 2d corresponding to the marker allowable range T stored in the marker position preset range storage 262, proceed to Step S11d.

### (Step S11b)

The comparison calculator 263 calculates the difference between the counter value N and the upper limit Nu. In such a case, the comparison calculator 263 may add the predetermined count value range 2d stored in the marker position preset range storage 262, to this calculated difference value between the counter value N and the upper limit Nu. These values calculated in this Step Sllb by the comparison calculator 263 are equivalent to the adjustment amount, in the next Step S11c, for the vertical blanking interval in the blanking interval adjustment unit 26.

### (Step S11c)

The blanking interval adjustment unit 26 shortens preferably the horizontal blanking interval in a vertical blanking interval by the amount equivalent to the value calculated in Step S11b. More specifically, the vertical blanking interval counter 261 advances the count based on the signal corresponding to an adjustment amount of vertical blanking interval inputted to the up-count terminal from the comparison calculator 263 so as to practically perform adjustment processing of shortening the measurement period of a vertical blanking interval. This adjustment processing adjusts the synchronization of the marker detection flag M₀ within the marker allowable range T, so that the desired synchronization can be achieved between the transmitting side and the receiving side.

### (Step S11d)

The comparison calculator 263 calculates the difference between the counter value N of the marker position detection counter 721, which has been fed back from the receive-side unit 70, corresponding to the marker detection flag M₀ set by the marker extraction unit 71 and the lower limit NL of the predetermined count value range 2d stored in the marker position preset range storage 262. The value of difference calculated by the comparison calculator 263 in this Step S11d is equivalent to the adjustment amount of vertical blanking interval, in the blanking interval adjustment unit 26, used in the next Step S11e.

### (Step S11e)

The blanking interval adjustment unit 26 expands the vertical blanking interval by the amount equivalent to the value calculated in Step S11d. More specifically, the vertical blanking interval counter 261 delays the count based on the signal corresponding to an adjustment amount of vertical blanking interval inputted to the down-count terminal from the comparison calculator 263 so as to practically perform adjustment processing of extending the measurement period of a vertical blanking interval. This adjustment processing adjusts the synchronization of the marker detection flag M₀ within the marker allowable range T, so that the desired synchronization can be achieved between the transmitting side and the receiving side.

### (Step S11f)

If the real-time display of the object image is done with a reduced delay and high image quality and then the image pickup of the object is terminated, this processing flow on synchronization adjustment will be terminated. If the image pickup thereof is not terminated, return to Step S111. Note that the aforementioned each processing of synchronization adjustments can be performed in parallel while the image is being displayed on the monitor 80.

The automotive wireless image transferring apparatus 100 exemplified in the second embodiment detects the position of a vertical synchronization marker sent together with the image data, in the receive-side unit 70, and then feeds back the detected position thereof to the transmit-side unit 20. The transmit-side unit 20 uses the fed-back marker position to calculate an amount of deviation in synchronization from the receiving side. And the transmit-side unit 20 can adjust the vertical blanking interval by counting it up or counting it down by the count corresponding to the thus calculated amount of deviation in synchronization.

Thus, while the receive-side unit 70 communicates with the transmit-side unit 20, the receive-side unit 70 can maintain the synchronization in real time with the transmit-side unit 20 within a desired range. Hence the receive-side unit 70 no longer needs to have storage devices therein, used to adjust the phase, such as a high-capacity buffer ring memory. As a result, the apparatus can be lighter in weight and smaller in size.

Also, if the monitoring information fed back from the receive-side unit 70 in the aforementioned Step S118 indicates that the phase lag is within a predetermined range, there will be no need for the transmitting side to adjust the deviation in synchronization. If, on the other hand, the monitoring information fed back from the receive-side unit 70 in the aforementioned Step S118 indicates a difference, for example, where the counter value N exceeds the upper limit Nu of the predetermined count value range 2d, the blanking interval adjustment unit 26 may adjust the synchronization in a manner such that the marker detection position is within the predetermined count value range 2d and is in the neighborhood of the lower limit NL of the predetermined count value range 2d after the predetermined count value range 2d is added to the difference.

The deviation in synchronization is typically caused by the phase misalignment of each clock between the transmit-side unit 20 and the receive-unit 70, and this misalignment tends to be almost constant under a constant temperature environment. Accordingly, if the counter value N exceeds the upper limit Nu of the predetermined count value range 2d and therefore a deviation is detected by the comparison calculator 263, the similar misalignment pattern is likely to continue for at least a certain period of time.

Thus the comparison calculator 263 calculates a count value in a manner such that the predetermined count value range 2d is added to a deviation amount, where the counter value N exceeds the upper limit Nu of the predetermined count value range 2d, and may supply a count-up trigger, corresponding to the value thus calculated, to the vertical blanking interval counter 261. That is, based on the fed-back counter value N, the blanking interval adjustment unit 26 may adjust the blanking interval by an amount derived by adding the predetermined count value range 2d to the difference between the predetermined count value range 2d and the counter value N exceeding the upper limit Nu thereof. This can permit a longer length of time until the next time when the synchronization adjustment needs to be made, so that the frequency of adjustment of blanking interval can be reduced. Since the frequency of adjustment of blanking interval can be reduced, the computational load and communication load can be reduced, thereby achieving a power-saving automotive wireless image transferring apparatus 100.

As described above, the automotive wireless image transferring apparatus 100 provides the image transfer and display at low cost and with reduced frame loss, frame overlapping and the like. Also, the automotive wireless image transferring apparatus 100 directly adjusts the length of horizontal blanking interval of image data without the use of a dedicated buffer memory for adjusting the phase and timing. Thus the delay of display images relative to the camera images can be reduced.

Also, the automotive wireless image transferring apparatus 100 adjusts the horizontal blanking interval only, on a clock-by-clock basis. Thus an adverse effect on the practically effective part of an object image in the image data is reduced.

Also, the blanking interval adjustment unit 26 adjusts the length of horizontal synchronization signal by adjusting the blanking interval, in a vertical synchronization signal composed on the basis of a horizontal synchronization signal corresponding to the number of lines. Accordingly, the automotive wireless image transferring apparatus 100 can adjust the cycle of vertical synchronization signal without changing the number of lines in each image frame.

As a result, the automotive wireless image transferring apparatus 100 can display the received images without causing pixels to be deviated in the horizontal direction at the time of image display.

Also, in each of a free-run transmitter and a free-run receiver of the automotive wireless image transferring apparatus 100, the phase difference and the frequency difference can be contained as appropriate within predetermined ranges. Thus the occurrence of failures can be reduced. The failures include a problem where the transmitted data arrive earlier than the display timing and a problem where conversely the transmitted data don't arrive in time for the display timing.

In the conventional practice, the phase difference in transmit-receive image synchronization signal cumulatively accumulates with time and an asynchronous state continues. This undesired state is prevented in the automotive wireless image transferring apparatus 100 according to the present embodiments. Since the asynchronous state does not continue, the display caused by the pixel skipping of image data in units of frame can be significantly reduced and the overlapped display, such as a repeated display of frame data stored in a buffer, and other undesired displays can be significantly reduced.

Hence the automotive wireless image transferring apparatus 100 reduces the occurrence of discontinuous moving images, so that a so-called "frame skip" or "frame jump" can be reduced and at the same time the moving images of an object that moves fast can be displayed with high reliability.

While the embodiments of the present invention have been described using specific terms, such description is for illustrative purposes only. The automotive wireless image transferring apparatus 100 according to the present invention is not limited to those of the above-described embodiments only, and it is to be understood that changes and variations in structure and/or operations may be made without departing from the spirit or scope of the appended claims. The technical ideas or concepts, underlying the present invention, which are exemplified and disclosed in the present embodiments are not limited to the transferring (transmission and receiving) realized by the wireless connection and may be applied to the transferring of image data through a wired connection.

A wireless image transferring apparatus according to another embodiment of the present invention comprises: a free-run transmitter including: a marker appending unit operative to append a vertical synchronization marker to image data; and a nondisplay period adjustment unit operative to monitor whether or not the position of a marker in the image data containing the vertical synchronization marker in a receiving side lies within a predetermined range based on monitoring information supplied, and operative to adjust the position of a marker, by expanding or contracting the nondisplay period of the image data, in such a manner that the position of a marker lies within the predetermined range, in the event that the position of a marker lies outside the predetermined range, wherein the free-run transmitter transmits the image data and receives the monitoring information; and a free-run receiver including: a marker extraction unit operative to extract the vertical synchronization marker from the image data received; and a marker position monitoring unit operative to detect the position of a marker in the image data containing the vertical synchronization marker extracted by the marker extraction unit and operative to generate the monitoring information containing positional information indicating the detected position of a marker, wherein the free-run receiver receives the image data and feeds back the monitoring information to the transmitter.

A wireless image receiving apparatus according to another embodiment of the present invention comprises: a marker extraction unit operative to extract a vertical synchronization marker contained in image data received; a marker position monitoring unit operative to generate monitoring information, containing positional information indicative of a marker position, by detecting the marker position in the image data containing the vertical synchronization marker extracted by the maker extraction unit; and a free-run transmit-receive unit operative to receive the image data and transmits the monitoring information.

A wireless image transmitting apparatus according to another embodiment of the present invention comprises: a marker appending unit operative to append a vertical synchronizing marker to image data; a nondisplay period adjustment unit operative to monitor whether or not the position of a marker in the image data containing the vertical synchronization marker in a receiving side of the image data lies within a predetermined range based on monitoring information supplied, and operative to adjust the position of a marker, by expanding or contracting the nondisplay period of the image data, in such a manner that the position of a marker lies within the predetermined range in the event that the position of a marker lies outside the predetermined range; and a free-run transmit-receive unit operative to transmit the image data and receives the monitoring information, wherein the monitoring information contains positional information indicative of the position of a marker in the image data containing the vertical synchronization marker detected in the receiving side of the image data.

A wireless image transferring method according to another embodiment of the present invention includes: appending a vertical synchronization marker to image data to be transmitted by a free-run transmitter; extracting the vertical synchronization marker from the image data received by a free-run receiver; generating monitoring information, by the receiver, containing marker positional information in the image data containing the vertical synchronization marker extracted in the extracting; feeding back the monitoring information generated in the generating, by the receiver, to the transmitter; and monitoring, by the transmitter, whether the position of a marker in the image data containing the vertical synchronization marker in the receiver lies within a predetermined range or not, based on the fed-back monitoring information, and adjusting the length of nondisplay period of the image data by expanding or contracting the nondisplay period of the image data, in such a manner that the position of a marker lies within the predetermined range, in the event that the position of a marker lies outside the predetermined range.

A wireless image receiving method according to another embodiment of the present invention includes: extracting a vertical synchronization marker contained in image data received; generating monitoring information containing marker positional information in the image data that contains the vertical synchronization marker extracted in the extracting; transmitting the monitoring information generated in the generating.

A wireless image transmitting method according to another embodiment of the present invention includes: appending a vertical synchronization marker to image data to be transmitted; and monitoring whether or not the position of a marker in the image data containing the vertical synchronization marker in a receiving side of the image data lies within a predetermined range, based on monitoring information supplied; and adjusting the position of a marker, by expanding or contracting the nondisplay period of the image data, in such a manner that the position of a marker lies within the predetermined range in the event that the position of a marker lies outside the predetermined range, wherein the monitoring information contains positional information indicative of the position of a marker, detected in the receiving side of the image data, in the image data containing the vertical synchronization marker.

## Claims

1. A wireless image transferring apparatus (100) comprising:
a free-run transmitter (20) including:
a marker appending unit (25) operative to append a vertical synchronization marker to image data; and
a nondisplay period adjustment unit (26) operative to adjust the length of nondisplay period of image data according to monitoring information supplied,
wherein the free-run transmitter (20) transmits the image data and receives the monitoring information; and
a free-run receiver (70) including:
a marker extraction unit (71) operative to extract the vertical synchronization marker from the image data received; and
a marker position monitoring unit (72) operative to monitor whether the position of a marker in the image data containing the vertical synchronization marker extracted by the marker extraction unit (71) lies within a predetermined range or not and operative to generate the monitoring information containing a synchronization adjustment amount used to expand or contract the nondisplay period of the image data such that the position of a marker lies within the predetermined range in the event that the position of a marker lies outside the predetermined range,
wherein the free-run receiver (70) receives the image data and feeds back the monitoring information to the transmitter (20).

2. A wireless image transferring apparatus (100) according to Claim 1, wherein the predetermined range is a predetermined range in a vertical blanking interval.

3. A wireless image transferring apparatus (100) according to Claim 1 or 2, wherein the nondisplay period adjustment unit adjusts the length of nondisplay period by expanding or contracting a horizontal blanking interval in the vertical blanking interval.

4. A wireless image transferring apparatus (100) according to Claim 1, 2, or 3, wherein the nondisplay period adjustment unit (26) adjusts the length of nondisplay period by expanding or contracting termination timing of the nondisplay period of the image data such that the position of a marker lies within the predetermined range.

5. A wireless image receiving apparatus (70) comprising:
a marker extraction unit (71) operative to extract a vertical synchronization marker contained in image data received;
a marker position monitoring unit (72) operative to monitor whether the position of a marker in the image data containing the vertical synchronization marker extracted by the marker extraction unit (71) lies within a predetermined range or not and operative to generate monitoring information containing a synchronization adjustment amount used to expand or contract the nondisplay period of the image data such that the position of a marker lies within the predetermined range in the event that the position of a marker lies outside the predetermined range; and
a free-run transmit-receive unit (50) operative to receive the image data and transmits the monitoring information.

6. A wireless image receiving apparatus (70) according to Claim 5, wherein the marker position monitoring unit (72) monitors whether the position of a maker lies within a predetermined range in a vertical blanking interval or not.

7. A wireless image receiving apparatus (70) according to Clam 5 or 6, wherein the marker position monitor unit (72) monitors whether or not the position of a marker lies within a predetermined period of vertical blanking interval in a manner such that a count value is sequentially counted up in response to a start of the vertical blanking interval and whether a count value corresponding to the marker position lies within a predetermined count value range or not is monitored.

8. A wireless image transmitting apparatus (20) comprising:
a marker appending unit (25) operative to append a vertical synchronizing marker to image data;
a nondisplay period adjustment unit (26) operative to adjust the length of nondisplay period according to monitoring information supplied; and
a free-run transmit-receive unit (40) operative to transmit the image data and receives the monitoring information,
wherein the monitoring information contains a synchronization adjustment amount used to expand or contract the nondisplay period of the image data such that the position of a marker lies within a predetermined range in the event that the position of a marker in the image data containing the vertical synchronization marker lies outside the predetermined range at a receiving side.

9. A wireless image transmitting apparatus (20) according to Claim 8, wherein the nondisplay period adjustment unit (26) adjusts the length of nondisplay period by expanding or contracting a horizontal blanking interval in a vertical blanking interval.

10. A wireless image transmitting apparatus (20) according to Claim 8 or 9, wherein the nondisplay period adjustment unit (26) adjusts the length of nondisplay period of the image data by expanding or contracting termination timing of nondisplay period of the image data in such a manner that the position of a marker lies within the predetermined range.

11. A wireless image transferring method including:
appending a vertical synchronization marker to image data to be transmitted by a free-run transmitter;
extracting the vertical synchronization marker from the image data received by a free-run receiver;
monitoring, by the receiver, whether the position of a marker in the image data containing the vertical synchronization marker extracted by the receiver in the extracting lies within a predetermined range or not;
generating monitoring information, by the receiver, containing a synchronization adjustment amount used to expand or contract the nondisplay period of the image data such that the position of a marker lies within the predetermined range in the event that the position of a marker lies outside the predetermined range;
feeding back the monitoring information, by the receiver, to the transmitter; and
adjusting the length of nondisplay period of the image data, by the transmitter, according to the fed-back monitoring information.

12. A wireless image receiving method including:
extracting a vertical synchronization marker contained in image data received;
monitoring whether the position of a marker in the image data containing the vertical synchronization marker extracted in the extracting lies within a predetermined range or not;
generating monitoring information containing a synchronization adjustment amount used to expand or contract the nondisplay period of the image data such that the position of a marker lies within the predetermined range, in the event that the position of a marker lies outside the predetermined range; and
transmitting the monitoring information generated in the generating.

13. A wireless image transmitting method including:
appending a vertical synchronization marker to image data to be transmitted; and
adjusting the length of nondisplay period of the image data according to monitoring information supplied,
wherein the monitoring information contains a synchronization adjustment amount used to expand or contract the nondisplay period of the image data such that the position of a marker lies within a predetermined range, in the event that the position of a marker in the image data containing the vertical synchronization marker lies outside the predetermined range at a receiving side of the image data.
